# EUROPEAN PATENT APPLICATION

(11) **EP 3 503 053 A1**
(43) Date of publication of application: **26.06.2019**
(21) Application number: 18214511.0
(22) Date of filing: 20.12.2018
(51) Int. Cl.: G08B 7/06, G08B 27/00, G08B 25/10, G08B 25/14

(54) **EMERGENCY NOTIFICATION SYSTEM AND METHOD**

(30) Priority: 22.12.2017 IN 201711046422
(71) Applicant: Carrier Corporation, Jupiter, FL 33478 (US)
(72) Inventor: LINGALA, Ramesh, 500081 Hyderabad (IN); CHAVALA, VenkataNarasimha Rao, 500081 Hyderabad (IN)
(74) Representative: Dehns

(57) **Abstract**

An emergency notification system (20) for a hotel property. The system includes an alarm control panel (22) for receiving information about an emergency condition at the hotel property. The system also includes a server (24) in operative communication with the alarm control panel, the server having access to a database of currently registered hotel guests and contact information for the currently registered hotel guests. The system further includes a mobile device (28) of a recipient (26) for receiving an emergency notification from the server in response to detection of the emergency condition by the alarm control panel, the emergency notification providing information related to the emergency condition.

## Description

### BACKGROUND

This disclosure relates generally to an emergency notification system.

In defined areas, such as a hotel property, amusement park, or educational institution or the like, emergency systems are in place to detect emergency conditions, such as a fire event. The emergency systems may sound an alarm or notify emergency response personnel. However, non-emergency personnel, such as hotel guests or amusement park guests, student in university, often do not have any information about the emergency if they are not in close proximity to the emergency site. Therefore, the guest may not be well informed about the safest and most effective evacuation route or areas to avoid.

### BRIEF SUMMARY

Disclosed is an emergency notification system for a hotel property. The system includes an alarm control panel for receiving information about an emergency condition at the hotel property. The system also includes a server in operative communication with the alarm control panel, the server having access to a database of currently registered hotel guests and contact information for the currently registered hotel guests. The system further includes a mobile device of a recipient for receiving an emergency notification from the server in response to detection of the emergency condition by the alarm control panel, the emergency notification providing information related to the emergency condition.

In addition to one or more of the features described above, or as an alternative, further embodiments may include that the emergency condition is a fire event.

In addition to one or more of the features described above, or as an alternative, further embodiments may include that the information content of the emergency notification comprises at least one of a location of the emergency event and an evacuation route.

In addition to one or more of the features described above, or as an alternative, further embodiments may include that the mobile device is one of a cellular phone, a tablet, or a smart watch.

In addition to one or more of the features described above, or as an alternative, further embodiments may include that the server and the fire alarm control panel are in wireless communication with each other.

In addition to one or more of the features described above, or as an alternative, further embodiments may include that the server and the fire alarm control panel are in wired communication with each other.

In addition to one or more of the features described above, or as an alternative, further embodiments may include that the server sends the emergency notification to the mobile device wirelessly via at least one of a text message, a mobile device application, an email, and a push notification.

Also disclosed is a method of notifying guests of a fire event. The method includes detecting a fire. The method also includes communicating information about the fire to a fire alarm control panel. The method further includes sending information to a plurality of mobile devices of registered hotel guests about the fire.

In addition to one or more of the features described above, or as an alternative, further embodiments may include that the fire alarm control panel sends the information about the fire to an access control database.

In addition to one or more of the features described above, or as an alternative, further embodiments may include that the access control database is stored on a server, the server automatically sending the information to the mobile devices via at least one of text message, a mobile device application, an email, and a push notification.

In addition to one or more of the features described above, or as an alternative, further embodiments may include that the mobile devices comprise at least one of a cellular phone, a tablet, and a smart watch.

In addition to one or more of the features described above, or as an alternative, further embodiments may include that the information sent to the mobile devices includes at least one of a fire location, at least one safety zone, and an evacuation route based on a GPS location of the registered hotel guests who are present within hotel premises.

In addition to one or more of the features described above, or as an alternative, further embodiments may include that the information is sent to registered hotel guests located at an exterior location of a hotel building.

In addition to one or more of the features described above, or as an alternative, further embodiments may include that a hotel administrator sends the information to the plurality of mobile devices.

In addition to one or more of the features described above, or as an alternative, further embodiments may include that the server sends the information to the mobile devices via at least one of Wi-Fi, cellular, push notification, and SMS mobile technology.

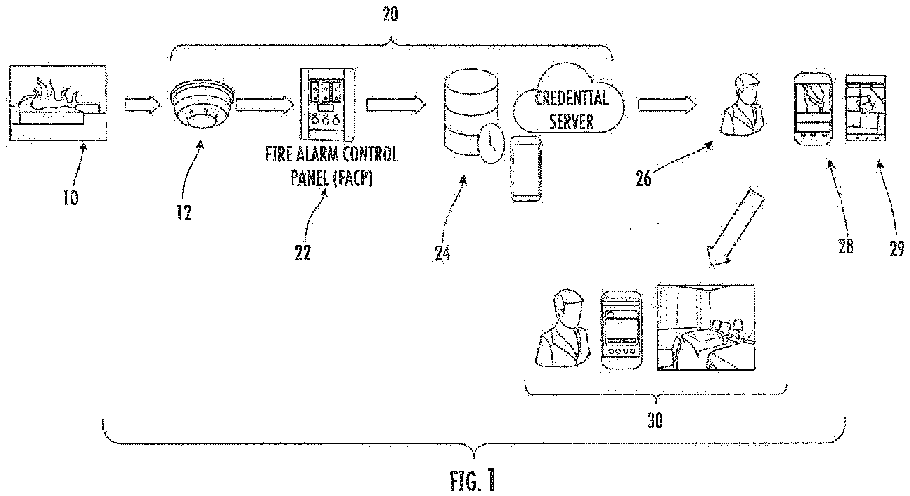

### BRIEF DESCRIPTION OF THE DRAWING

The present disclosure is illustrated by way of example and not limited in the accompanying figure in which like reference numerals indicate similar elements.

The Figure is a schematic illustration of an emergency notification system.

### DETAILED DESCRIPTION

The Figure illustrates an emergency notification system and method that may be employed in an environment where guests are present. For example, the emergency notification system may be employed in connection with large properties, such as hotels, resorts, amusement parks, school campuses, sports stadiums, or the like. As described herein, methods for more efficiently notifying guests are provided by employing emergency detection devices and infrastructure to provide guests information and instructions about an emergency condition. In some embodiments, the emergency condition is a fire, but it is to be appreciated that other events may be considered an emergency condition and may benefit from the emergency notification system and methods described herein.

Referring to the Figure, illustrated is an embodiment of a system and method of providing individuals with information and/or instructions about an emergency condition. In the illustrated embodiment, a fire event is depicted with fire alarm system instrumentation, but the concepts described herein may be applicable to other types of emergencies. As shown, a fire event is referenced with numeral 10 and will be detected with a smoke detector 12 or a similar device that is part of an emergency notification system 20. Detection of the fire event 10 is signaled from the smoke detector 12 to a fire alarm control panel 22. The smoke detector 12 can be a wired or wireless device which transfers the fire information to the fire alarm control panel 22.

The emergency notification system 20 may have multiple fire alarm control panels which may be networked together and to other system components by a data network. The data network may have a physical layer of wire, radio waves, fiber optic cables, coaxial cable, or a combination of any of the above. Over the physical layer, additional protocol layers may be implemented to carry data, such as a TCP/IP network (commonly referred to as the "internet"). The data network may be configured as a local area network (LAN) that connects the panel(s) and building automation systems.

The fire alarm control panel 22 may also be coupled via the internet to an access control database that is stored on a server 24. The server 24 enables communication with wired or wireless communication devices. The server 24 may reside in the cloud (distributed network), connected to the internet or be located locally. The server 24 may be a server that resides in a cellular communication network and is able to communicate with wireless devices, such as tablets, smartphones, or similar devices. In the illustrated embodiment, the server 24 communicates with an individual 26 by sending information to mobile device 28. The individual 26 may be located within the hotel structure (e.g., building), or on the hotel premises, but at an exterior location such as at a pool, gym or recreation area. Alternatively, the individual 26 may be located off the hotel premises. Although a single individual 26 and mobile device 28 are described and illustrated, it is to be understood that the server 24 communicates information and/or instructions to numerous individuals via numerous mobile devices. In some embodiments, all currently registered guests are sent notifications. In other embodiments, currently registered guests that choose to receive such notifications are sent information and/or instructions related to an emergency event, such as a fire condition.

The server 24 has data stored thereon, or is in communication with a database, that allows for a determination of currently registered guests (or registered guests that have opted in for notifications) and their contact information. The communication between the server 24 and the mobile device 28 may be accomplished in various manners. Communication may be achieved with notification messages through Wi-Fi, cellular or push notifications, or other mobile technology such as SMS. Examples of messaging may include instant messaging, text messaging, electronic mail (email), and/or smart devices notification message (text or digitized messaging such as digitized audio). A mobile device application may also be downloaded by the individual 26 to receive the communications. By automating the messages that are communicated to the individuals 26, a hotel administrator or other emergency response personnel do not need to spend time and effort notifying the fire event to hotel guests, particularly those located outside of the hotel structure.

The information provided to the individuals may include information about the location of the fire, where safe zones are, and an evacuation map, such as the illustrative map 29. GPS technology may be utilized to determine the exterior location of the individual 26 and the information may be tailored to the precise location of the individual. For the GPS example described above, the term "exterior location" refers to a guest that is present within the hotel premises, but is located outside his/her hotel room. This information is merely illustrative and is not limiting of the type of information that may be provided in the emergency notifications. Upon receipt of the information, the individual 26 may alert any other individuals, such as others staying in their room or group of rooms, about the emergency notification, as represented with numeral 30. The alert to guests can include information related to the fire location (e.g., floor) and a route map which shows the nearest safe zone.

In some embodiments, the fire alarm control panel 22 communicates with the individuals via a hotel administrator mobile app. In such embodiments, the hotel administrator has access to a database with all currently registered guests and their contact information. The hotel administrator then may utilize communication technology to send the notifications directly, in contrast to the automated system described above.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments have been described, it is to be understood that aspects of the disclosure may include only some of the described embodiments. Accordingly, the disclosure is not to be seen as limited by the foregoing description, but is only limited by the scope of the appended claims.

## Claims

1. An emergency notification system (20) for a hotel property, the system comprising:
an alarm control panel (22) for receiving information about an emergency condition at the hotel property;
a server (24) in operative communication with the alarm control panel, the server having access to a database of currently registered hotel guests and contact information for the currently registered hotel guests; and
a mobile device (28) of a recipient (26) for receiving an emergency notification from the server in response to detection of the emergency condition by the alarm control panel, the emergency notification providing information related to the emergency condition.

2. The emergency notification system of claim 1, wherein the emergency condition is a fire event (10).

3. The emergency notification system of claim 1 or 2, wherein the information content of the emergency notification comprises at least one of a location of the emergency event, and an evacuation route.

4. The emergency notification system of claim 1, 2 or 3, wherein the mobile device (28) is one of a cellular phone, a tablet, or a smart watch.

5. The emergency notification system of any preceding claim, wherein the server (24) and the alarm control panel (22) are in wireless communication with each other.

6. The emergency notification system of any of claims 1 to 4, wherein the server (24) and the alarm control panel (22) are in wired communication with each other.

7. The emergency notification system of any preceding claim, wherein the server (24) sends the emergency notification to the mobile device (28) wirelessly via at least one of a text message, a mobile device application, an email, and a push notification.

8. A method of notifying guests of a fire event comprising:
detecting a fire;
communicating information about the fire to a fire alarm control panel (22); and
sending information to a plurality of mobile devices (28) of registered hotel guests about the fire.

9. The method of claim 8, wherein the fire alarm control panel (22) sends the information about the fire to an access control database.

10. The method of claim 9, wherein the access control database is stored on a server (24), the server automatically sending the information to the mobile devices (28) via at least one of text message, a mobile device application, an email, and a push notification.

11. The method of any of claims 8 to 10, wherein the mobile devices (28) comprise at least one of a cellular phone, a tablet, and a smart watch.

12. The method of any of claims 8 to 11, wherein the information sent to the mobile devices (28) includes at least one of a fire location, at least one safety zone, and an evacuation route based on a GPS location of the registered hotel guests who are present within hotel premises.

13. The method of any of claims 8 to 12, wherein the information is sent to registered hotel guests located at an exterior location of a hotel building.

14. The method of any of claims 8 to 13, wherein a hotel administrator sends the information to the plurality of mobile devices (28).

15. The method of any of claims 8 to 13, wherein the server (24) sends the information to the mobile devices (28) via at least one of Wi-Fi, cellular, push notification, and SMS mobile technology.
